# EUROPÄISCHE PATENTSCHRIFT

(11) **EP 2 431 172 B1**
(45) Veröffentlichungstag und Bekanntmachung des Hinweises auf die Patenterteilung: **26.09.2012**
(21) Anmeldenummer: 11007647.8
(22) Anmeldetag: 20.09.2011
(51) Int. Cl.: B32B 17/00, B32B 17/10, B32B 37/00, B32B 38/00, B32B 37/06, C03C 27/12

(54) **Heizkastenmodul zur Herstellung von Verbundsicherheitsglas**
Heater box module for manufacturing compound safety glass
Module de bloc de chauffage pour la fabrication de verre de sécurité composite

(30) Priorität: 21.09.2010 DE 102010045955
(43) Veröffentlichungstag der Anmeldung: 21.03.2012
(73) Patentinhaber: Bystronic Armatec GmbH, 91710 Gunzenhausen (DE)
(72) Erfinder: Raab, Karl-Heinz, 91710 Gunzenhausen (DE); Wellner, Rupert, 91602 Dürrwangen (DE)
(74) Vertreter: Mielke, Klaus

(56) Entgegenhaltungen:
- WO-A1-03/057478
- WO-A2-2008/048464
- DE-U1- 20 013 204

## Beschreibung

Die Erfindung betrifft ein Heizkastenmodul zur Herstellung von Verbundsicherheitsglas.

Zur Herstellung von Verbundsicherheitsglas wird ein Glaspaket aus zwei oder mehr Scheiben mit jeweils einer dazwischen liegenden Folie z.B. aus Polyvinylbutyral (PVB) aufgebaut. Um einen dauerhaften Verbund zwischen den übereinander liegenden Komponenten zu erzielen, muss das Glaspaket verschiedenen Temperatur- und Druckbehandlungen unterzogen werden. Hierzu sind in einer Fertigungsanlage verschiedene Module vorhanden, insbesondere Walzenpressen und Heizkästen. So weist eine Fertigungsanlage in der Regel einen sogenannten Vorverbund auf. Dieser kann z.B. ein als Vorheizzone dienendes erstes Heizkastenmodul, eine anschließende erste Walzenpresse, ein als Hauptheizzone dienendes zweites Heizkastenmodul und schließlich eine zweite Walzenpresse aufweisen. Die Module des Vorverbunds werden vom Glaspaket bei dessen Bearbeitung sukzessive durchlaufen.

Dabei wird ein Glaspaket beim Durchlauf durch das erste Heizkastenmodul in der Vorheizzone so erwärmt, dass die eine oder mehrere Folien im Paket einen Zustand annehmen, der als "Bindungsbereitschaft" bezeichnet wird. Gelangt das Glaspaket nun in die erste Walzenpresse, so wird dieser Zustand ausgenutzt, um Luft aus dem Glaspaket herauszudrücken. Beim Durchlauf des Glaspakets durch das zweite Heizkastenmodul in der Hauptheizzone wird Wärme nun derart gezielt in das Paket eingebracht, dass die eine oder mehrere Folien die sogenannte Bindungstemperatur von ca. 140 Grad erreichen. Hierzu wird im zweiten Heizkastenmodul Wärmestrahlung erzeugt, welche die Glasschichten durchdringt und auf die Folie bzw. Folien einwirkt. Vorteilhaft ist die Wellenlänge dieser Strahlung auf die maximale Absorptionsfähigkeit der jeweils eingesetzten Folie abgestimmt, um eine zügige Erwärmung zu erreichen. Die eigentliche Lamination des derart vorbereiteten Glaspakets kann in der zweiten Walzenpresse erfolgen. Um eine möglichst hohe Durchlaufgeschwindigkeit der Glaspakete zu erreichen und ein optimales Laminationsergebnis zu gewährleisten, müssen die Prozessparameter in jedem Modul des Vorverbunds möglichst präzise und konstant einstellbar sein.

Aus der DE 200 13 204 U1 ist eine Vorrichtung zur Herstellung von Werkstücken aus Verbundsicherheitsglas bekannt. Diese weist eine erste Heizeinrichtung auf, die ein Werkstück durch Strahlung aufheizt, und eine zweite Heizeinrichtung, die das Werksstück durch Konvektion aufheizt. Die zweite Heizeinrichtung weist hierzu einen Wärmetauscherraum mit einem Gebläserad auf, der oberhalb eines zur Durchführung des Werkstücks dienenden Arbeitsbereich angeordnet ist. Hiermit wird die im Wärmetauscherraum gebildete HeiBluft nach unten über seitlich angeordnete spaltförmige Luftauslässe in den Arbeitsbereich und von dort über das mittig angeordnete Gebläserad wieder in den Wärmetauscherraum zurück bewegt. Um einen außenreichenden Wärmeübergang zwischen HeiBluft und Werkstückoberfläche zu erreichen, muss die HeiBluft mit hoher Strömungsgeschwindigkeit über die seitlichen Luftauslässe eingeblasen werden. Dies hat den Nachteil, dass auch ein Teil der Heißluft aus dem Arbeitsraum seitlich austritt. Dieser kann vom mittig angeordneten Gebläserad nicht mehr in den Wärmetauscherraum zurückbewegt werden und geht als Verlust verloren. Zudem besteht die Gefahr einer ungleichmäßigen Erwärmung des Werkstücks.

Aus der DE 197 45 160 A1 ist ein Verfahren und eine Vorrichtung zur Herstellung von Verbundsicherheitsglas bekannt. Dabei wird jeweils elne Glasscheibe auf eine Transportstrecke gelegt, gewaschen und getrocknet. Dann wird wenigstens eine Folie und eine weitere Scheibe aufgelegt. Dieser Sandwich wird in einer Vorverbundstrecke erwärmt und zum Auspressen von Luft verpresst. Der Sandwich wird dann in einer gekapselten Strecke, d.h. einem Rollenverbundofen, durch kurzwellige Strahlung, besonders ultrahochfrequente Strahlung, d.h. Mikrowellen, unter Druck bis zum Plastifizieren der Kunststofffolie erwärmt. Da bei der Erwärmung mittels ultrahochfrequenter Strahlung viel Wärmeenergie in den Sandwich eingebracht wird, muss dieser anschließend unter gleichbleibendem Druck rückgekühlt werden, um ein Beschädigung der Folie zu vermeiden. Hierzu wird ein spezieller Rollenverbundofen mit Luftkühlung eingesetzt, bei dem zwischen den Presswalzen obere und untere Luftdüsen zur Kühlung des Glases angeordnet sind. Beim Betrieb einer solchen Anordnung treten ebenfalls erhebliche Verluste auf.

In der EP 2 065 181 A1 wird ein Verfahren zum Laminieren von z.B. gekrümmten Glasplatten beschrieben. Hierzu wird eine spezielle Anordnung von Heizelementen verwendet, um eine differenzielle Erwärmung entlang der Glasplatten zu erzielen, so dass die vordere, führende Kante der Glasplatten eine größere Temperatur als hintere, nachlaufende Kante aufweist. Demgegenüber ist die Temperatur in Querrichtung der Glasplatten gleichbleibend.

Aus der US 2008/0060744 A1 ist ein Verfahren und eine Vorrichtung zur Laminierung von Glasscheiben bekannt. Dabei wird die zu laminierende Sandwichstruktur vorgeheizt, und anschließend einem Unterdruck und einer elektromagnetischen Strahlung mit ausgewählter Frequenz und Leistung ausgesetzt. Die endgültige Erwärmung erfolgt mittels einer Konvektionswärmequelle, bei der Warmluft über Düsen auf das Glaspaket geblasen wird. Während der Aufwärmung wird auf das Glaspaket Druckkraft besonders über Rollen ausgeübt. Am Ende der Vorrichtung ist schlieBlich eine Kühlkammer angeordnet, in der laminierte Glaspakete zum Abbau von deren Temperatur stapelweise eingeschoben werden können. Diese Vorrichtung weist den Nachteil auf, dass zur Durchführung der einzelnen Erwärmungsschritte eine Vielzahl von Öfen vorhanden sind, die von einem zu bearbeitenden Glaspaket hintereinander durchlaufen werden müssen. Die Vorrichtung ist somit aufwendig. Bei der Zusammenstellung der Schichtung eines Glaspakets für ein Verbundsicherheitsglas können auch beschichtete Glasscheiben eingesetzt werden. Mit solchen Beschichtungen, z.B. aus Metalloxiden, werden die Gebrauchseigenschaften einer Glasscheibe beeinflusst, z.B. die Lichtbrechung, Wärmedämmung usw.. Bei der Lamination derartiger Glaspakete tritt aber das Problem auf, dass das von den Strahlern in den Heizkastenmodulen erzeugte Infrarotlicht zum Teil reflektiert wird und somit nicht mehr ausreichend auf die Folien im Inneren des Glaspakets einwirken kann. Diesem Problem kann mit einer reduzierten Durchlaufgeschwindigkeit des Glaspakets durch den Vorverbund begegnet werden. Der der freien Konvektion wird dann Zeit gegeben, um die Betriebsmittel im Inneren des Heizkastenmoduls aufzuheizen. Eine solche freie Wärmeleitung ist jedoch mit großen Zeitkonstanten behaftet, so dass die Steuerbarkeit eines solchen Heizkastenmoduls beeinträchtigt wird. Es besteht die Gefahr einer Überheizung konstruktiver Bestandteile im Inneren und damit einer Überwärmung des Glaspakets. Die während eines Laminiervorgangs auch zum Schutze der mindestens einen Laminationsfolie im Glaspaket erforderliche Temperaturabsenkung kann nicht schnell genug ablaufen, da das Heizkastenmodul in unerwünschter Weise nachheizt. Dabei wird Wärme weiterhin auf das Glasmaterial abgegeben und breitet sich bis zur Folie aus. Es besteht die Gefahr, dass die Folie besonders in Randbereichen verbrennt. Weiterhin besteht bei einem Glaspaket mit einer großen Längenausdehnung die Gefahr, dass streifenförmige Bereiche auf Grund nicht gleichmäßiger Temperatureinwirkungen unterschiedliche Laminationsgüten aufweisen. Wird ein Heizkastenmodul jedoch nicht lange genug vorgeheizt, so besteht die Gefahr einer nicht ausreichenden Durchwärmung eines Glaspakets und damit ebenfalls einer ungenügenden Verbundwirkung.

Der Erfindung liegt die Aufgabe zu Grunde, ein bei der Herstellung von Verbundsicherheitsglas einsetzbares Heizkastenmodul so weiterzubilden, dass hiermit die Aufwärmung eines durchlaufenden Glaspakets, insbesondere im Rahmen eines so genannten Vorverbundes, möglichst energiesparend und in einem einzigen Arbeitsgang schnell durchgeführt werden kann.

Die Aufgabe wird mit den Merkmalen des im Anspruch 1 angegebenen Heizkastenmoduls gelöst. Vorteilhafte weitere Ausgestaltungen der Erfindung sind in den Unteransprüchen angegebenen.

Das erfindungsgemäße Heizkastenmodul verfügt über einen oberen Heizkasten, wovon Wärme mittels oberer Infrarotstrahler und Heißluft mittels eines oberen Umluftsystems in eine obere Heizzone zur Erwärmung eines durch eine Glasdurchlaufzone geförderten Glaspakets abgegeben wird. Dabei weist das obere Umluftsystem einen oberen Düsenstock, worüber Heißluft direkt auf eine Oberseite des Glaspakets geblasen wird, und obere Absaugmittel zur Rückführung der Heißluft direkt von der Oberseite des Glaspakets in das obere Umluftsystem auf.

Abhängig vom jeweils gewünschten bzw. möglichen Aufwand kann ein erfindungsgemäßes Heizkastenmodul gemäß einer besonders vorteilhaften weiteren Ausführung mit einem zusätzlichen, dem oberen Heizkasten entsprechenden unteren Heizkasten ausgestattet sein, wovon Wärme mittels unterer Infrarotstrahler und Heißluft mittels eines unteren Umluftsystems in eine untere Heizzone zur Erwärmung des Glaspakets abgegeben wird. Dabei weist auch das zusätzliche untere Umluftsystem einen unteren Düsenstock, worüber Heißluft direkt auf eine Unterseite des Glaspakets geblasen wird, und untere Absaugmittel zur Rückführung der Heißluft direkt von der Unterseite des Glaspakets in das untere Umluftsystem auf.

Die Erfindung bietet den Vorteil, dass die Wirkung der Infrarotstrahler im jeweiligen Heizkasten mit Hilfe zumindest eines gemäß der Erfindung ausgeführten Umluftsystems für Heißluft optimal ergänzt wird. So wird besonders durch die erfindungsgemäße direkte Beblasung der Oberseite bzw. von Ober-und Unterseite eines Glaspakets mit Heißluft über einen oberen bzw. einen oberen und unteren Düsenstocks im jeweiligen Umluftsystem eine schnelle Einleitung von Wärmeenergie in das Glaspaket erreicht. Besonders vorteilhaft kann abhängig von der Dicke, Schichtung und dem Vorhandensein von eventuellen reflektierenden Beschichtungen die bei einem Glaspaket jeweils exakt benötigte Wärmemenge gezielt eingeleitet werden. Zudem wird durch den oberen bzw. oberen und unteren Düsenstock eine über die gesamte Oberseite bzw. Ober- und Unterseite gleichmäßig verteilte Wärmekonvektion in das Innere eines Glaspakets hervorgerufen. Der Wärmeübergang in ein Glaspaket wird erheblich verbessert, so dass auch Glaspakete optimal erwärmt werden können, welche beschichtete Scheiben mit strahlungsreflektierenden Eigenschaften enthalten.

Die gezielte, präzise und gleichmäßige Einleitung von Konvektionswärme über die jeweiligen Düsenstöcke wird weiter durch die erfindungsgemäße gezielte Rückführung der Heißluft direkt von der Oberseite bzw. von Ober-und Unterseite in das jeweilige Umluftsystem unterstützt. Hierdurch werden lokale Überhitzungen besonders im Zentrum der oberen bzw. oberen und unteren Heizzone vermieden. Die von einem Düsenstock auf ein Flächensegment des Glaspakets eingeleitete Heißluft kann somit in demselben Flächensegment wieder in das jeweilige Umluftsystem rückgeführt werden. Es treten in der Glasdurchlaufzone im Inneren des erfindungsgemäßen Heizkastenmoduls keine lokalen Überdrücke und Querströmungen auf. Die Erfindung ermöglicht es, dass durch die Düsenstöcke gleichmäßig über die Oberseite bzw. Ober- und Unterseite verteilt gerade so viel Heißluft auf das Glaspaket aufgeblasen wird, wie über die entsprechenden Absaugmittel lokal auch wieder rückgeführt wird. An den Seiten des Heizkastenmoduls tritt somit nahezu keine HeiBluft aus. Da nahezu die gesamte Heißluft großflächig wieder rückgeführt wird, sind die Verluste durch seitliche Abströmungen bzw. Ausblasungen an Heißluft minimal. Neben einer exakten und reproduzierbaren Einstellung der für einen erfolgreichen Laminationsprozess jeweils benötigten Wärmemenge kann mit der Rückführung der Heißluft in das jeweilige Umluftsystem auch eine erhebliche Energieeinsparung erzielt werden.

Gemäß weiteren, vorteilhaften Ausführungen des erfindungsgemäßen Heizkastenmoduls weist der obere bzw. untere Düsenstock zwischen den oberen bzw. unteren Infrarotstrahlern angeordnete obere bzw. untere Heißluftzuführungskanäle mit auf die Oberseite bzw. Unterseite des Glaspakets gerichteten Schlitzdüsen auf. Vorteilhaft sind dabei die oberen bzw. unteren Heißluftzuführungskanäle mit den Schlitzdüsen parallel nebeneinander liegend und über der Oberseite bzw. Unterseite des Glaspakets verteilt in der oberen bzw. unteren Heizzone angeordnet. Besonders vorteilhaft erstrecken sich dabei die oberen bzw. unteren HeiBluftzuführungskanäle mit den Schlitzdüsen über die gesamte Breite der oberen bzw. unteren Heizzone.

Diese Ausführungen mit der gemischten Anordnung, d.h. zyklisch wechselnden Aufeinanderfolge von Infrarotstrahlern und Schlitzdüsen in den jeweiligen Heizkästen bieten den besonderen Vorteil, dass eine über die gesamte Länge eines Glaspakets in der Glasdurchlaufzone optimal gleichmäßig verteilte Einbringung von Strahlungswärme über die Infrarotstrahler und von Konvektionswärme über jeweils beidseitig daneben liegenden Schlitzdüsen erfolgt. Zudem können die Umluftsysteme auf Grund der Führung der Heißluft über Zuführungskanäle nahezu geschlossen ausgeführt werden. Besonders vorteilhaft wird dabei die Heißluft beidseitig an den Stirnseiten in die jeweiligen Zuführungskanäle eingespeist.

Bei einer weiteren Ausführung der Erfindung kann die Energieeffizienz weiter dadurch verbessert werden, dass die oberen bzw. unteren Absaugmittel des oberen bzw. unteren Umluftsystems obere bzw. unteren Absaugschlitze aufweisen, welche jeweils unmittelbar oberhalb eines oberen bzw. unterhalb eines unteren Infrarotstrahlers angeordnet sind. Hierdurch erfolgt die Absaugung der eingeblasenen HeiBluft quasi "hinter" den Infrarotstrahlern, d.h. im oberen bzw. oberen und unteren Umluftsystem oberhalb bzw. oberhalb und unterhalb der oberen bzw. oberen und unteren Infrarotstrahler. Damit kann auch diejenige Verlustwärme, welche von den langwelligen und zur Erwärmung im Inneren des Glaspakets nicht nutzbaren Strahlungsanteilen der Infrarotstrahler hervorgerufen wird, nahezu vollständig in die jeweiligen Umluftkreisläufe rückgeführt werden.

Bei einer weiteren Ausführung der Erfindung ist der Abstand des oberen Umluftsystems gemeinsam mit den oberen Infrarotstrahlern zur Oberseite eines darunter befindlichen Glaspakets durch Mittel zur Höhenverstellung einstellbar ist. Dies ist besonders vorteilhaft durch eine Höhenverstellung des gesamten oberen Heizkastens ausführbar. Sind bei einer weiteren Ausführung der Erfindung die Umluftsysteme mit Heißluftzuführungskanälen und Schlitzdüsen ausgestattet, so kann eine Höhenverstellung auch durch eine Einstellung des Düsenabstands zur Glasoberfläche erreicht werden.

Bei weiteren Ausführungen der Erfindung können Intensität und Steuerbarkeit des Wärmeübergangs in ein Glaspaket weiter verbessert werden, indem die Strömungsgeschwindigkeiten der Heißluft im oberen bzw. unteren Umluftsystem so einstellbar sind, dass die über den oberen bzw. oberen und unteren Düsenstock auf die Oberseite bzw. Ober- und Unterseite des Glaspakts gerichteten Volumenströme an Heißluft vorgegebene Werte annehmen.

Zur Förderung eines Glaspakets durch das Heizkastenmodul können vorteilhaft Transportrollen vorhanden sein. Ist in einem solchen Fall das Heizkastenmodul mit einem zusätzlichen unteren Heizkasten ausgestattet, so sind die unteren Heißluftzuführungskanäle gemäß einer weiteren Ausführung der Erfindung jeweils vorteilhaft unter einer Transportrolle angeordnet und weisen ein Paar an Schlitzdüsen auf, die beidseitig der darüber liegenden Transportrolle seitlich nach oben auf die Unterseite des Glaspakets gerichtet sind. In der Durchlaufrichtung eines Glaspakets durch ein Heizkastenmodul sind gegenüber liegende Paare an Infrarotstrahlern angeordnet. Zwischen jedem in der unteren Heizzone liegenden Infrarotstrahler eines Paares ist eine Transportrolle platziert. Wird nun bereits unmittelbar in der Einlaufzone ein erstes Paar an Infrarotstrahlern platziert, so ergibt sich in der unteren Heizzone in Durchlaufrichtung für ein Glaspaket eine Abfolge von Paaren aus einem Infrarotstrahler und einer Transportrolle. Diese Ausführung bietet den Vorteil, dass ein Glaspaket, welches in ein Heizkastenmodul einläuft, bereits in der Einlaufzone der Einwirkung von Infrarotstrahlern in der oberen und unteren Heizzone ausgesetzt wird. Über die gesamte Länge eines Heizkastenmoduls gesehen ist dann die Anzahl der Paare an gegenüber liegenden Infrarotstrahlern in der oberen und unteren Heizzone identisch mit der Anzahl der Transportrollen in der unteren Heizzone. Ein solcher Aufbau verfügt im Vergleich zu herkömmlichen Heizkastenmodulen bei identischen äußeren Abmessungen über ein zusätzliches Paar von Infrarotstrahlern.

Die Erfindung und weitere vorteilhafte Ausführungen derselben werden an Hand eines in denen Figuren dargestellten, bevorzugten Ausführungsbeispiels nachfolgend näher erläutert. Dabei zeigt
- Fig. 1: den Querschnitt durch ein beispielhaftes, gemäß der Erfindung ausgeführtes Heizkastenmodul,
- Fig. 2: eine Prinzipdarstellung der HeiBluftführung bei der Ausführung des Heizkastenmoduls gemäß Figur 1,
- Fig. 3: einen Längsschnitt durch das beispielhafte Heizkastenmodul gemäß Fig. 1, und
- Fig. 4: eine Detaildarstellung der Heißluftführung an den Stirnseiten des Heizkastenmoduls von Figur 1.

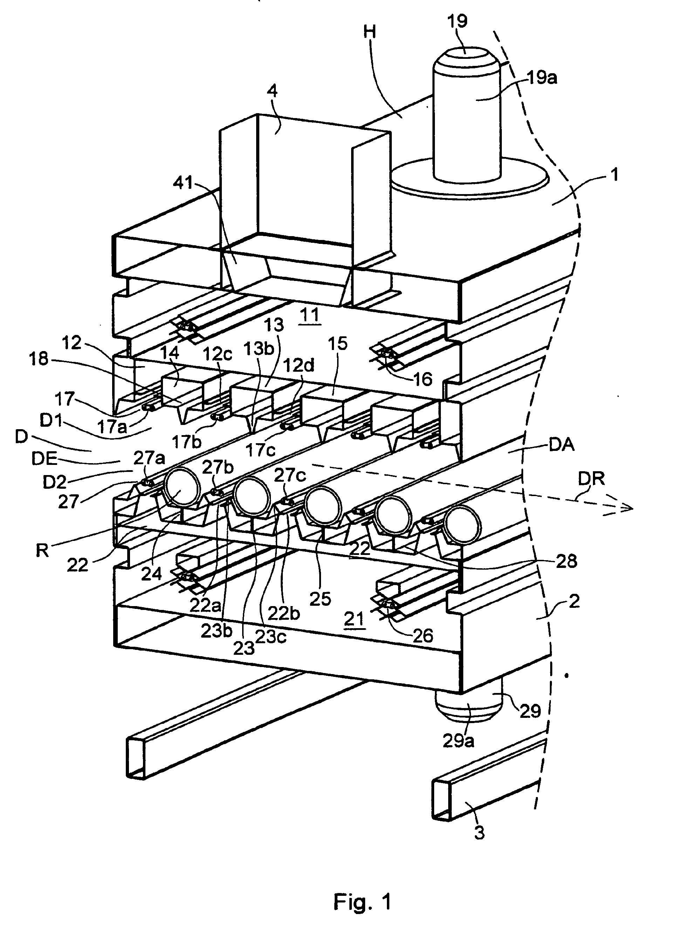

Fig. 1 zeigt einen Schnitt durch ein beispielhaftes, gemäß der Erfindung aufgebautes Heizkastenmodul H. Dieses weist einen oberen und unteren Heizkasten 1, 2 mit einer oberen und unteren Heizzone D1, D2 auf, welche eine Glasdurchlaufzone D begrenzen. Das Heizkastenmodul H mit den Heizkästen 1 und 2 wird vorteilhaft von einem Bodenrahmen 3 getragen. Auf der Oberseite des oberen Heizkastens 1 ist weiterhin ein Kamin 4 mit einer steuerbaren Schwingklappe 41 dargestellt. Hierüber kann im Falle einer Überhitzung schlagartig Heißluft aus dem oberen Heizkasten 1 abgelassen werden.

Bei dem in Figur 1 dargestellten Beispiel kann dem Heizkastenmodul H ein Glaspaket G von links über eine Einlaufzone DE zugeführt werden. Geführt von einer Reihe an Transportrollen R im unteren Heizkasten 2 durchquert es dieses in Durchlaufrichtung DR bis zu einer Auslaufzone DA an der rechten Seite des Moduls. Je nach Ausführung kann dabei das Glaspaket entweder kontinuierlich in einem Zuge durch das Heizkastenmodul H gefördert werden, oder es verbleibt für die Dauer eines oszillierenden Reversierbetriebs in der Glasdurchlaufzone D und wird nach Ablauf einer einstellbaren Zeit bzw. einer vorgegebenen Anzahl an Vor- und Rückschubbewegungen über die Auslaufzone DA weiterbefördert.

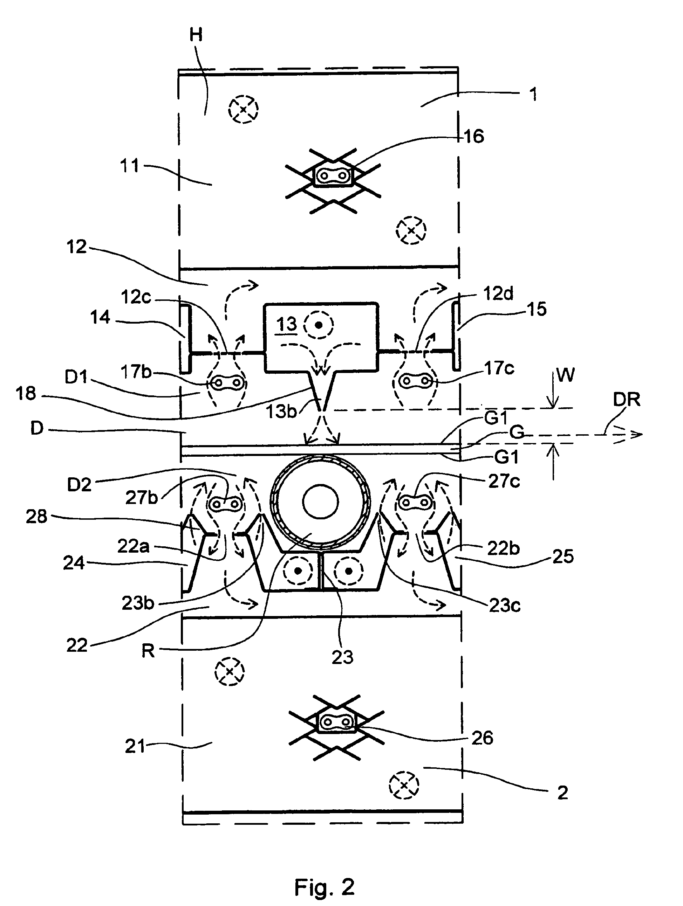

Der Aufbau des beispielhaften Heizkastenmoduls H, d.h. insbesondere von dessen oberem und unterem Heizkasten 1, 2 mit den beiden geschlossenen Umluftsystemen für Heißluft und den dadurch bereitgestellten, auf eine Ober- und Unterseite G1, G2 des Glaspakets G einwirkenden Heizzonen D1, D2, werden nachfolgend an Hand der Figuren 1 und 2 näher erläutert. Dabei sind die Strömungen der Heißluft im oberen bzw. unteren Umluftsystem und in den Heizzonen D1, D2 durch strichlierte Pfeile dargestellt. Zudem wird in Fig. 2 durch Pfeilspitzen bzw. Pfeilenden symbolisiert, wenn ein Heißluftstrom aus der Zeichenblattebene herausgerichtet bzw. in diese hineingerichtet ist.

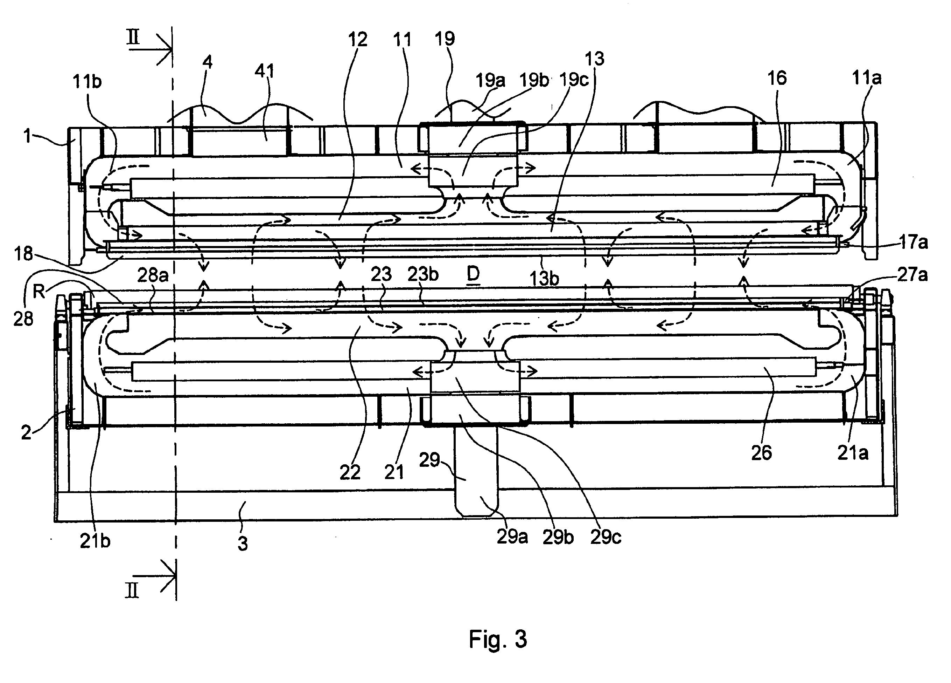

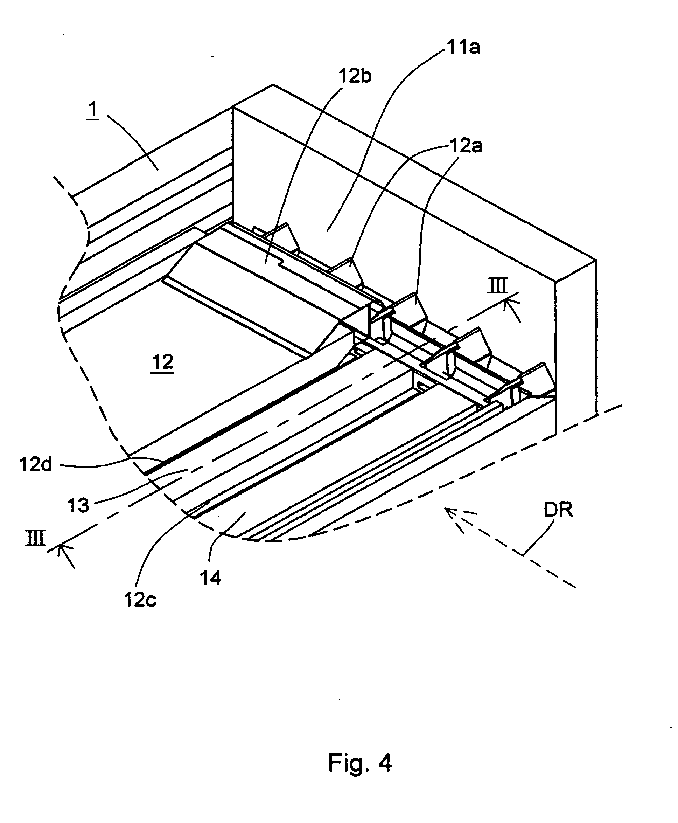

Der obere Heizkasten 1 weist zum einen ein oberes Strahlersystem 17 aus einer Reihe von Infrarotstrahlern auf. In den Figuren 1, 2 sind beispielhaft die an der Einlaufzone DE befindlichen oberen Infrarotstrahler 17a, 17b, 17c hervorgehoben. Das Strahlersystem 17 ist durch ein oberes Heißluftumluftsystem ergänzt. Dieses weist einen oberen Heizraum 11 mit einem oberen Heizregister 16 zur Heißlufterzeugung auf. Die dort erzeugte Heißluft wird über eine vordere und hintere Umlenkzone 11a, 11b, die sich jeweils an den Seiten des oberen Heizkastens 1 parallel zur Durchlaufrichtung DR erstrecken und im Schnitt von Fig. 3 zu sehen sind, beidseitig in einen geschlossenen, oberen Düsenstock 18 eingeleitet. In Fig. 4 ist die Umlenkzone 11a gemeinsam mit einem Luftleitblech 12b und einer Vielzahl von Luftleitkeilen 12a, welche die dazwischen liegenden Einsaugbereiche der Heißluftzuführungskanäle des oberen Düsenstocks 18, z.B. die Heißluftzuführungskanäle 13, 14 voneinander abkoppeln, ausschnittsweise in einer Draufsicht gezeigt.

Vorteilhaft wird der obere Düsenstock 18 bei der in den Figuren dargestellten vorteilhaften Ausführungsform der Erfindung aus einer Vielzahl von parallel nebeneinander und zwischen jeweils einem Infrarotstrahler des oberen Strahlersystems 17 angeordneten oberen Heißluftzuführungskanälen gebildet. In Fig. 2 ist die Heißluftführung am Beispiel des oberen Heißluftzuführungskanals 13 im Detail dargestellt. In den Figuren 2 und 3 sind beispielhaft zwei links bzw. rechts des Heißluftzuführungskanals 13 benachbarte weitere obere Heißluftzuführungskanäle 14, 15 hervorgehoben.

Vorteilhaft weisen die oberen Heißluftzuführungskanäle direkt nach unten auf die Oberseite G1 des Glaspakets G gerichtete Schlitzdüsen auf, die vorteilhaft über die gesamte Breite der Glasdurchlaufzone D verlaufen. So weist, wie in in Fig. 2 zu sehen ist, z.B. der Heißluftzuführungskanal 13 die Schlitzdüse 13b auf. Die aus jeder der parallelen Schlitzdüsen austretende Heißluftströmung ist somit direkt auf die Oberseite G1 des Glaspaktes G gerichtet. Hierdurch wird erfindungsgemäß eine über die gesamte Oberseite G1 gleichmäßig verteilte, intensive Wärmeeinleitung in das Glaspaket erreicht.

Erfindungsgemäß wird die aufgeblasene Heißluft über obere Absaugmittel in das Heißluftumluftsystem rückgeführt. Hierzu sind vorteilhaft auf beiden Seiten eines jeden Heißluftzuführungskanals Absaugschlitze angeordnet, worüber die Heißluft aus der oberen Heizzone D1 in einen oberen Luftsammelraum 12, auch Ansaugkanal genannt, rückgeführt wird. So sind z.B. beidseitig des Heißluftzuführungskanals 13 die oberen Absaugschlitze 12c, 12d vorhanden. Von dort gelangt die Heißluft wieder in den oberen Heizraum 11 und steht damit erneut für einen Blaszyklus zur Verfügung.

Erfindungsgemäß treten somit in der oberen Heizzone D1 eine Vielzahl von nebeneinander befindlichen Mikrozirkulationen an Heißluft auf, welche jeweils von einem Heißluftzuführungskanal mit Schlitzdüse und den beidseitigen Absaugschlitzen aufrechterhalten wird. Im Idealfall stellt sich somit im Bereich unter jedem Heißluftruführungskanal eine eigenständiger, lokaler Heißluftkreislauf ein. Bei einem solchen kann die von einer Schlitzdüse auf die Glasoberseite geblasene Heißluft beidseitig über die Absaugschlitz nahezu vollständig wieder so aus dem Heizraum abgesaugt werden, dass nahezu keine lokalen Überdrücke und somit keine horizontalen Querströmungen von Heißluft entlang der Glasoberfläche auftreten. In Folge davon tritt somit nahezu keine Heißluft aus der Ein- und Auslaufzone und den Längsseiten des Helzkastenmoduls entlang der Durchlaufrichtung aus. Hierdurch werden sowohl der Wirkungsgrad des erfindungsgemäßen Heizkastenmoduls als auch die Sicherheit für Bedienpersonal erheblich verbessert.

Bei dieser besonders vorteilhaften und im Beispiel der Figuren bereits dargestellten Ausführung der Erfindung weist der obere Düsenstock 18 jeweils einen zwischen den oberen Infrarotstrahlern 17a, 17b, 17c angeordneten oberen Heißluftzuführungskanal 13, 14, 15 mit jeweils einer auf die Oberseite G1 des Glaspakets G gerichteten Schlitzdüse auf. Besonders vorteilhaft sind somit die oberen Heißluftzuführungskanäle mit den Schlitzdüsen parallel nebeneinander liegend und über der Oberseite G1 des Glaspakets G verteilt in der oberen Heizzone D1 angeordnet. Bei einem Durchlauf des Glaspakets G wird somit abwechselnd Strahlungswärme über einen Infrarotstrahler des oberen Strahlersystems 17 und Heißluft über die Schützdüse eines Heißluftzuführungskanals des oberen Düsenstocks 18 in die Oberseite G1 eingeleitet.

Gemäß einer weiteren und im Beispiel der Figuren ebenfalls bereits dargestellten Ausführung der Erfindung sind die Infrarotstrahler und die Absaugschlitze in vertikaler Richtung so hintereinander angeordnet, dass die Heißluft bei einer Absaugung um einen Infrarotstrahler herumgeführt wird. Auf diese Weise kann die von deren langwelligen Strahlungsanteil verursachte Verlustwärme in den Umluftstrom übernommen werden. Dies ist z.B. im Schnitt der Fig. 2 am Beispiel der Infrarotstrahler 17b und 17c und den jeweils oberhalb davon befindlichen oberen Absaugschlitzen 12c und 12d zu erkennen. Jeder Infrarotstrahler wird somit von der Absaugluft nahezu allseitig umströmt. Hiermit kann der Energieverbrauch des erfindungsgemäßen Heizkastenmoduls erheblich reduziert werden.

Bei der in den Figuren dargestellten Ausführung der Erfindung wird die Heißluftströmung im oberen Umluftsystem mittels eines oberen Umluftgebläses 19 hervorgerufen. Diese ist in Fig. 3 mit Hilfe von strichlierten Pfeilen kenntlich gemacht. Das obere Umluftgebläse 19 weist einen drehzahlregelbaren Antrieb 19a mit einem Flügelrad 19b auf, welches in einem Ansaugstutzen 19c untergebracht ist. Wie besonders aus der Schnittdarstellung von Fig. 3 zu erkennen ist, mündet der Ansaugstutzen in den oberen Luftsammelraum 12 und fördert die dort angesaugte Heißluft in den oberen Heizraum 11.

Bei einer weiteren vorteilhaften Ausführung der Erfindung ist insbesondere der Abstand W zwischen den Schlitzdüsen der Heißluftzuführungskanäle im oberen Düsenstock 18 des oberen Umluftsystems und der Oberseite des Glaspakets G einstellbar. Besonders vorteilhaft ist der Abstand des oberen Umluftsystems und gemeinsam mit den Infrarotstrahlern des oberen Strahlersystems zur Oberseite G1 des Glaspakets G durch Mittel zur Höhenverstellung insbesondere des gesamten oberen Heizkastens 1 einstellbar. Diese sind aus Gründen der besseren Übersicht in den Figuren nicht dargestellt.

Gemäß einer weiteren und im Beispiel der Figuren ebenfalls bereits dargestellten Ausführung der Erfindung ist das Heizkastenmodul H mit einem zusätzlichen unteren Heizkasten 2 ausgestattet. Dieser ist prinzipiell in der gleichen Weise wie der obere Heizkasten 1 aufgebaut. Ein konstruktiver Detailunterschied liegt darin, dass in der unteren Heizzone D2 zusätzlich zur Führung eines Glaspakets G dienende Transportmittel angeordnet sind, im Beispiel der Fig. 1 eine Reihe von fünf Transportrollen R.

So weist der untere Heizkasten 2 zum einen ein unteres Strahlersystem 27 aus einer Reihe von Infrarotstrahlern auf. In den Figuren 1 und 2 sind beispielhaft die an der linken Einlaufzone DE befindlichen unteren Infrarotstrahler 27a, 27b, 27c hervorgehoben. Das Strahlersystem 27 ist wiederum durch ein unteres Umluftsystem für Heißluft ergänzt. Dieses weist einen unteren Heizraum 21 mit einem unteren Heizregisters 26 zur Heißlufterzeugung auf. Die dort erzeugte Heißluft wird über eine vordere und hintere Umlenkzone 21a, 21b, die sich jeweils an den Seiten des oberen Heizkastens 1 parallel zur Durchlaufrichtung DR erstrecken und im Schnitt von Fig. 3 zu sehen sind, beidseitig in einen geschlossenen, unteren Düsenstock 28 eingeleitet. Vorteilhaft wird der untere Düsenstock 28 bei der in den Figuren dargestellten vorteilhaften Ausführungsform der Erfindung aus einer Vielzahl von parallel nebeneinander und zwischen jeweils einem Infrarotstrahler des unteren Strahlersystems 27 angeordneten unteren Heißluftzuführungskanälen gebildet. In Fig. 2 ist die Heißluftführung am Beispiel des unteren Heißluftzuführungskanals 23 im Detail dargestellt. Dieser weist einen annähernd wannenförmigen Querschnitt auf, in dessen Mittel eine Transportwalze R platziert ist. In den Figuren 2 und 3 sind beispielhaft zwei links bzw. rechts des Heißluftzuführungskanals 23 benachbarte weitere untere Heißluftzuführungskanäle 24, 25 hervorgehoben.

Vorteilhaft weisen die unteren Heißluftzuführungskanäle jeweils von Paar von direkt nach oben auf die Unterseite G2 des Glaspakets G gerichtete Schlitzdüsen auf, welche vorteilhaft über die gesamte Breite der Glasdurchlaufzone D verlaufen und Heißluft beidseits der jeweils dazwischen liegenden Transportrolle nach oben blasen. So weist, wie besonders im Detailausschnitt von Fig. 2 zu sehen ist, z.B. der Heißluftzuführungskanal 23 das Paar an Schlitzdüsen 23b, 23c auf. Die hieraus beidseits der dazwischen liegenden Transportrolle R nach oben austretende Heißluftströmung ist somit direkt auf die Unterseite D2 des Glaspaktes G gerichtet. Auch hierdurch wird erfindungsgemäß eine über die gesamte Unterseite G1 gleichmäßig verteilte, intensive Wärmeeinleitung in das Glaspaket erreicht.

Erfindungsgemäß wird die aufgeblasene Heißluft in das Umluftsystem über untere Absaugmittel rückgeführt. Hierzu sind vorteilhaft auf beiden Seiten eines jeden Heißluftzuführungskanals Absaugschlitze angeordnet, worüber die Heißluft aus der unteren Heizzone D2 in einen unteren Luftsammelraum 22, d.h. Ansaugkanal, rückgeführt wird. So sind z.B. beidseitig des HeiBluftzuführungskanals 23 und dessen Schlitzdüsen 23b, 23c die unteren Absaugschlitze 22a, 22b vorhanden. Von dort gelangt die Heißluft in den unteren Heizraum 21 und steht damit für einen Blaszyklus erneut zur Verfügung. Erfindungsgemäß treten somit auch in der unteren Heizzone D2 eine Vielzahl von nebeneinander befindlichen Mikrozirkulationen an Heißluft auf, welche jeweils von einem Heißluftzuführungskanal mit eine Paar an Schlitzdüsen und den beidseitigen Absaugschlitzen aufrechterhalten wird. Im Idealfall stellt sich somit im Bereich über jedem Heißluftzuführungskanal eine eigenständiger, lokaler Heißluftkreislauf ein. Bei einem solchen kann die von dem Schlitzdüsenpaar eines Heißluftzuführungskanals auf die Glasunterseite geblasene Heißluft beidseitig über die Absaugschlitz nahezu vollständig wieder so aus dem Heizraum abgesaugt werden, dass nahezu keine lokalen Überdrücke und somit keine horizontalen Querströmungen von Heißluft entlang der Glasoberfläche auftreten. In Folge davon tritt somit nahezu keine Heißluft aus der Ein- und Auslaufzone und den Längsseiten des Heizkastenmoduls entlang der Durchlaufrichtung aus. Hierdurch werden sowohl der Wirkungsgrad des erfindungsgemäßen Heizkastenmoduls als auch die Sicherheit für Bedienpersonal erheblich verbessert.

Bei dieser besonders vorteilhaften und im Beispiel der Figuren bereits dargestellten Ausführung der Erfindung weist der untere Düsenstock 28 jeweils einen zwischen den unteren Infrarotstrahlern 27a, 27b, 27c angeordneten unteren Heißluftzuführungskanal 23, 24, 25 mit jeweils einem auf die Unterseite G2 des Glaspakets G gerichteten Paar an Schlitzdüsen auf. Besonders vorteilhaft sind somit die unteren Heißluftzuführungskanäle 23, 24, 25 mit den Schlitzdüsen parallel nebeneinander liegend und über die Unterseite G2 des Glaspakets G verteilt in der unteren Heizzone D2 angeordnet. Bei einem Durchlauf des Glaspakets G wird somit abwechselnd Strahlungswärme über einen Infrarotstrahler des unteren Strahlersystems 27 und Heißluft über die Schlitzdüsen eines Heißluftzuführungskanals des unteren Düsenstocks 28, vorzugsweise beidseitig einer dazwischen liegenden Transportrolle R, in die Unterseite G2 eingeleitet.

Gemäß einer weiteren und im Beispiel der Figuren bereits dargestellten Ausführung der Erfindung sind die Infrarotstrahler und die Absaugschlitze in vertikaler Richtung so hintereinander angeordnet, dass die Heißluft bei einer Absaugung um einen Infrarotstrahler herumgeführt wird. Auf diese Weise kann die von deren langwelligen Strahlungsanteil verursachte Verlustwärme in den Umluftstrom übernommen werden. Dies ist z.B. im Schnitt der Fig. 2 am Beispiel der Infrarotstrahler 27b und 27c und den unterhalb davon befindlichen unteren Absaugschlitzen 22a und 22b zu erkennen. Jeder Infrarotstrahler wird somit von der Absaugluft nahezu allseitig umströmt. Hiermit kann der Energieverbrauch des erfindungsgemäßen Heizkastenmoduls erheblich reduziert werden.

Bei der in den Figuren dargestellten Ausführung der Erfindung wird die Heißluftströmung im unteren Umluftsystem mittels eines unteren Umluftgebläses 29 hervorgerufen. Diese ist in der Schnittdarstellung von Fig. 3 mit Hilfe von strichlierten Pfeilen kenntlich gemacht. Das untere Umluftgebläse 29 weist einen drehzahlregelbaren Antrieb 29a mit einem Flügelrad 29b auf, welches in einem Ansaugstutzen 29c untergebracht ist. Wie besonders aus der Schnittdarstellung von Fig. 3 zu erkennen ist, mündet der Ansaugstutzen in den unteren Luftsammelraum 22 und fördert die dort angesaugte Heißluft in den unteren Heizraum 21.

Gemäß einer weiteren, besonders in Fig. 1 dargestellten Ausführung ist in der oberen und unteren Heizzone D1, D2 direkt in der Einlaufzone DE für ein

Glaspaket G ein erstes Paar an Infrarotstrahlern 17a, 27a gegenüber liegend angeordnet. Diese Ausführung bietet den Vorteil, dass ein Glaspaket G, welches in das Heizkastenmodul H einläuft, bereits in der Einlaufzone der Einwirkung von Infrarotstrahlern ausgesetzt wird. Im Vergleich zu herkömmlichen Heizkastenmodulen tritt der konstruktive Vorteil auf, dass ein zusätzliches Paar an Infrarotstrahlern im Inneren des Heizkastenmoduls angeordnet werden kann. Über die Länge eines Heizkastenmoduls gesehen ist dann die Anzahl der Paare an gegenüber liegenden Infrarotstrahlern in der oberen und unteren Heizzone D1, D2 identisch mit der Anzahl der Transportrollen R in der unteren Heizzone D2. Im Beispiel der Figur 1 treffen somit fünf Paare an Infrarotstrahlern auf fünf nebeneinander liegende Transportrollen R.

Bei einer weiteren Ausführung des erfindungsgemäßen Heizkastenmoduls ist die Strömungsgeschwindigkeit der Heißluft im oberen bzw. oberen und unteren Umluftsystem so einstellbar, dass der über den oberen bzw. unteren Düsenstock 18, 28 auf die Ober- bzw. Unterseite G1, G2 des Glaspakts G gerichtete Volumenstrom an Heißluft jeweils einen vorgegebenen Wert annimmt. Hiermit können eventuell die Güte der Lamination der Scheiben des Glaspakets beeinträchtigende und unnötige Energieverluste verursachende Überhitzungen vermieden werden.

### Bezugszeichenliste

- H: Heizkastenmodul
- 1, 2: oberer, unterer Heizkasten
- D: Glasdurchlaufzone
- D1, D2: obere, untere Heizzone
- DE, DA: Einlaufzone, Auslaufzone für ein Glaspaket
- DR: Durchlaufrichtung für ein Glaspaket
- R: Transportrollen für ein Glaspaket
- G: Glaspaket
- G1, G2: Oberseite, Unterseite
- 1: oberer Heizkasten
- 17: Oberes Strahlersystem
- 17a, 17b, 17c: obere Infrarotstrahler
- 11: oberer Heizraum
- 16: oberes Heizregister zur Heißlufterzeugung
- 11a, 11b: vordere, hintere Umlenkzone
- 18: oberer Düsenstock
- 13: ein oberer Heißluftzuführungskanal
- 13b: Schlitzdüse
- W: einstellbarer Abstand
- 14, 15: benachbarte obere Heißluftzuführungskanäle
- 12: oberer Luftsammelraum (Ansaugkanal)
- 12a: Luftleitkeile
- 12b: Luftleitblech
- 12c, 12d: obere Absaugschlitze
- 19: oberes Umluftgebläse
- 19a: Antrieb
- 19b: Flügelrad
- 19c: Ansaugstutzen
- 2: unterer Heizkasten
- 27: Unteres Strahlersystem
- 27a, 27b, 27c: untere Infrarotstrahler
- 21: unterer Heizraum
- 26: unteres Heizregister zur Heißlufterzeugung
- 21a, 21b: vordere, hintere Umlenkzone
- 28: unterer Düsenstock
- 23: ein unterer Heißluftzuführungskanal
- 23b, 23c: Schlitzdüsen
- 24, 25: benachbarte untere Heißluftzuführungskanäle
- 22: unterer Luftsammelraum (Ansaugkanal)
- 22a, 22b: untere Absaugschlitze
- 29: unteres Umluftgebläse
- 29a: Antrieb
- 29b: Flügelrad
- 29c: Ansaugstutzen
- 3: Bodenrahmen
- 4: Kamin
- 41: Schwingklappe

## Patentansprüche

1. Heizkastenmodul zur Herstellung von Verbundsicherheitsglas mit einem oberen Heizkasten (1), wovon Wärme mittels oberer Infrarotstrahler (17a, 17b, 17c) und Heißluft mittels eines oberen Umluftsystems (11, 12, 13, 19) in eine obere Heizzone (D1) zur Erwärmung eines durch eine Glasdurchlaufzone (D) geförderten Glaspakets (G) abgegeben wird, wobei das obere Umluftsystem aufweist
a) einen oberen Düsenstock (18), worüber Heißluft direkt auf eine Oberseite (G1) des Glaspakets (G) geblasen wird, und
b) obere Absaugmittel (12, 12a-12d) zur Rückführung der Heißluft direkt von der Oberseite (G1) des Glaspakets (G) in das obere Umluftsystem (11, 12, 13, 19).

2. Heizkastenmodul nach Anspruch 1, wobei der obere Düsenstock (18) zwischen den oberen Infrarotstrahlern (17a, 17b, 17c) angeordnete obere Heißluftzuführungskanäle (13, 14, 15) mit auf die Oberseite (G1) des Glaspakets (G) gerichteten Schlitzdüsen (13b) aufweist.

3. Heizkastenmodul nach Anspruch 2, wobei die oberen Heißluftzuführungskanäle (13, 14, 15) mit den Schlitzdüsen (13b) parallel nebeneinander liegend und über der Oberseite (G1) des Glaspakets (G) verteilt in der oberen Heizzone (D1) angeordnet sind.

4. Heizkastenmodul nach Anspruch 2 oder 3, wobei sich die oberen Heißluftzuführungskanäle (13, 14, 15) mit den Schlitzdüsen (13b) über die gesamte Breite der oberen Heizzone (D1) erstrecken.

5. Heizkastenmodul nach einem der vorangegangenen Ansprüche, wobei die oberen Absaugmittel (12, 12a-12d) des oberen Umluftsystems (11, 12, 13, 19) obere Absaugschlitze (12c, 12d) aufweisen, und ein Absaugschlitz (12c, 12d) jeweils unmittelbar oberhalb eines oberen Infrarotstrahlers (17b, 17c) angeordnet ist.

6. Heizkastenmodul nach einem der vorangegangenen Ansprüche, wobei der Abstand (W) des oberen Umluftsystems (11, 12, 13, 19) und der oberen Infrarotstrahler (17a, 17b, 17c) zur Oberseite (G1) des Glaspakets (G) durch Mittel zur Höhenverstellung insbesondere des oberen Heizkastens (1) einstellbar ist.

7. Heizkastenmodul nach einem der vorangegangenen Ansprüche, wobei die Strömungsgeschwindigkeit der Heißluft im oberen Umluftsystem (11, 12, 13, 19) so einstellbar ist, dass der über den oberen Düsenstock (18) auf die Oberseite (G1) des Glaspakts (G) gerichtete Volumenstrom an Heißluft einen vorgegebenen Wert annimmt.

8. Heizkastenmodul nach einem der vorangegangenen Ansprüche, mit einem unteren Heizkasten (2), wovon Wärme mittels unterer Infrarotstrahler (27a, 27b, 27c) und Heißluft mittels eines unteren Umluftsystems (21,22, 23, 29) in eine untere Heizzone (D2) zur Erwärmung des Glaspakets abgegeben wird, wobei das untere Umluftsystem aufweist
a) einen unteren Düsenstock (28), worüber Heißluft direkt auf eine Unterseite (G2) des Glaspakets (G) geblasen wird, und
b) untere Absaugmittel (22, 22a-22b) zur Rückführung der Heißluft direkt von der Unterseite (G2) des Glaspakets (G) in das untere Umluftsystem (21, 22, 23, 29).

9. Heizkastenmodul nach Anspruch 8, wobei der untere Düsenstock (28) zwischen den unteren Infrarotstrahlern (27a, 27b, 27c) angeordnete untere Heißluftzuführungskanäle (23, 24, 25) mit auf die Unterseite (G2) des Glaspakets (G) gerichteten Schlitzdüsen (23b, 23c) aufweist.

10. Heizkastenmodul nach Anspruch 9, wobei die unteren Heißluftzuführungskanäle (23, 24, 25) mit den Schlitzdüsen (23b, 23c) parallel nebeneinander liegend und über der Unterseite (G2) des Glaspakets (G) verteilt in der unteren Heizzone (D2) angeordnet sind.

11. Heizkastenmodul nach Anspruch 9 oder 10, wobei sich die unteren Heißluftzuführungskanäle (23, 24, 25) mit den Schlitzdüsen (23b, 23c) über die gesamte Breite der unteren Heizzone (D2) erstrecken.

12. Heizkastenmodul nach einem der Ansprüche 9, 10 oder 11, mit Transportrollen (R) im unteren Heizkasten (2) zur Förderung des Glaspakets (G), wobei
a) die unteren Heißluftzuführungskanäle (23, 24, 25) jeweils unter einer Transportrolle (R) angeordnet sind, und jeweils
b) ein Paar an Schlitzdüsen (23b, 23c) aufweisen, welche beidseitig der darüber liegenden Transportrolle (R) seitlich nach oben auf die Unterseite (G2) des Glaspakets (G) gerichtet sind.

13. Heizkastenmodul nach einem der Ansprüche 8 bis 12, wobei die unteren Absaugmittel (22, 22a-22b) des unteren Umluftsystems (21, 22, 23, 29) untere Absaugschlitze (22a, 22b) aufweisen, und ein Absaugschlitz (22a, 22b) jeweils unmittelbar unterhalb eines unteren Infrarotstrahlers (27b, 27c) angeordnet ist.

14. Heizkastenmodul nach einem der Ansprüche 8 bis 13, wobei die Strömungsgeschwindigkeit der Heißluft im unteren Umluftsystem (21, 22, 23, 29) so einstellbar ist, dass der über den unteren Düsenstock (28) auf die Unterseite (G2) des Glaspakts (G) gerichtete Volumenstrom an Heißluft einen vorgegebenen Wert annimmt.

## Claims

1. Heater box module for manufacturing compound safety glass, with an upper heater box (1), from which heat is discharged by means of upper infrared emitters (17a, 17b, 17c) and hot air is discharged by means of an upper circulating-air system (11, 12, 13, 19) into another heating zone (D1) for the purpose of heating a glass batch (G) conveyed through a glass run-through zone (D), the upper circulating-air system having
a) an upper tuyère connection piece (18), via which hot air is blown directly onto a top side (G1) of the glass batch (G), and
b) upper suction-extraction means (12, 12a-12d) for returning the hot air directly from the top side (G1) of the glass batch (G) into the upper circulating-air system (11, 12, 13, 19).

2. Heater box module according to Claim 1, the upper tuyère connection piece (18) having upper hot-air supply ducts (13, 14, 15) arranged between the upper infrared emitters (17a, 17b, 17c) and possessing slit tuyères (13b) directed onto the top side (G1) of the glass batch (G).

3. Heater box module according to Claim 2, the upper hot-air supply ducts (13, 14, 15) which possess the slit tuyères (13b) being arranged next to one another in parallel and, distributed over the top side (G1) of the glass batch (G), in the upper heating zone (D1).

4. Heater box module according to Claim 2 or 3, the upper hot-air supply ducts (13, 14, 15) which possess the slit tuyères (13b) extending over the entire width of the upper heating zone (D1).

5. Heater box module according to one of the preceding claims, the upper suction-extraction means (12, 12a-12d) of the upper circulating-air system (11, 12, 13, 19) having upper suction-extraction slots (12c, 12d), and a suction-extraction slot (12c, 12d) being arranged in each case directly above an upper infrared emitter (17b, 17c).

6. Heater box module according to one of the preceding claims, the distance (W) of the upper circulating-air system (11, 12, 13, 19) and of the upper infrared emitters (17a, 17b, 17c) from the top side (G1) of the glass batch (G) being capable of being set by means for adjusting the height of, in particular, the upper heater box (1).

7. Heater box module according to one of the preceding claims, the flow velocity of the hot air in the upper circulating-air system (11, 12, 13, 19) being capable of being set such that the volume flow of hot air directed onto the top side (G1) of the glass batch (G) via the upper tuyère connection piece (18) assumes a stipulated value.

8. Heater box module according to one of the preceding claims, with a lower heater box (2), from which heat is discharged by means of lower infrared emitters (27a, 27b, 27c) and hot air is discharged by means of a lower circulating-air system (21, 22, 23, 29) into a lower heating zone (D2) for the purpose of heating the glass batch, the lower circulating-air system having
a) a lower tuyère connection piece (28), via which hot air is blown directly onto an underside (G2) of the glass batch (G), and
b) lower suction-extraction means (22, 22a-22b) for returning the hot air directly from the underside (G2) of the glass batch (G) into the lower circulating-air system (21, 22, 23, 29).

9. Heater box module according to Claim 8, the lower tuyère connection piece (28) having lower hot-air supply ducts (23, 24, 25) arranged between the lower infrared emitters (27a, 27b, 27c) and possessing slit tuyères (23b, 23c) directed onto the underside (G2) of the glass batch (G).

10. Heater box module according to Claim 9, the lower hot-air supply ducts (23, 24, 25) which possess the slit tuyères (23b, 23c) being arranged next to one another in parallel and, distributed over the underside (G2) of the glass batch (G), in the lower heating zone (D2).

11. Heater box module according to Claim 9 or 10, the lower hot-air supply ducts (23, 24, 25) which possess the slit tuyères (23b, 23c) extending over the entire width of the lower heating zone (D2).

12. Heater box module according to one of Claims 9, 10 or 11, with transport rollers (R) in the lower heater box (2) for conveying the glass batch (G),
a) the lower hot-air supply ducts (23, 24, 25) being in each case arranged below a transport roller (R), and
b) in each case having a pair of slit tuyères (23b, 23c) which are directed laterally upwards onto the underside (G2) of the glass batch (G) on both sides of the transport roller (R) lying above them.

13. Heater box module according to one of Claims 8 to 12, the lower suction-extraction means (22, 22a-22b) of the lower circulating-air system (21, 22, 23, 29) having lower suction-extraction slots (22a, 22b), and a suction-extraction slot (22a, 22b) being in each case arranged directly below a lower infrared emitter (27b, 27c).

14. Heater box module according to one of Claims 8 to 13, the flow velocity of the hot air in the lower circulating-air system (21, 22, 23, 29) being capable of being set such that the volume flow of hot air directed onto the underside (G2) of the glass batch (G) via the lower tuyère connection piece (28) assumes a stipulated value.

## Revendications

1. Module de bloc de chauffage pour la fabrication de verre de sécurité feuilleté comprenant un bloc de chauffage supérieur (1), depuis lequel de la chaleur est diffusée au moyen de dispositifs à rayonnement infrarouge supérieurs (17a, 17b, 17c) et de l'air chaud est diffusé au moyen d'un système de circulation d'air (11, 12, 13, 19) dans une zone de chauffage supérieure (D1) en vue de chauffer un paquet de verre (G) transporté à travers une zone de passage de verre (D), le système de circulation d'air supérieur présentant
a) un raccord de buse supérieur (18), par le biais duquel de l'air chaud est soufflé directement sur un côté supérieur (G1) du paquet de verre (G), et
b) des moyens d'aspiration supérieurs (12, 12a-12d) pour la recirculation de l'air chaud directement depuis le côté supérieur (G1) du paquet de verre (G) dans le système de circulation d'air supérieur (11, 12, 13, 19).

2. Module de bloc de chauffage selon la revendication 1, dans lequel le raccord de buse supérieur (18) présente des canaux d'alimentation d'air chaud supérieurs (13, 14, 15) disposés entre les dispositifs à rayonnement infrarouge supérieurs (17a, 17b, 17c) avec des buses à fente (13b) orientées vers le côté supérieur (G1) du paquet de verre (G).

3. Module de bloc de chauffage selon la revendication 2, dans lequel les canaux d'alimentation d'air chaud supérieurs (13, 14, 15) sont disposés avec les buses à fente (13b) parallèlement les uns aux autres et de manière répartie sur le côté supérieur (G1) du paquet de verre (G) dans la zone de chauffage supérieure (D1) .

4. Module de bloc de chauffage selon la revendication 2 ou 3, dans lequel les canaux d'alimentation d'air chaud supérieurs (13, 14, 15) s'étendent avec les buses à fente (13b) sur toute la largeur de la zone de chauffage supérieure (D1).

5. Module de bloc de chauffage selon l'une quelconque des revendications précédentes, dans lequel les moyens d'aspiration supérieurs (12, 12a-12d) du système de circulation d'air supérieur (11, 12, 13, 19) présentent des fentes d'aspiration supérieures (12c, 12d) et une fente d'aspiration (12c, 12d) est à chaque fois disposée directement au-dessus d'un dispositif à rayonnement infrarouge supérieur (17b, 17c).

6. Module de bloc de chauffage selon l'une quelconque des revendications précédentes, dans lequel la distance (W) du système de circulation d'air supérieur (11, 12, 13, 19) et des dispositifs à rayonnement infrarouge supérieurs (17a, 17b, 17c) au côté supérieur (G1) du paquet de verre (G) peut être ajustée par le biais de moyens de réglage en hauteur, notamment du bloc de chauffage supérieur (1).

7. Module de bloc de chauffage selon l'une quelconque des revendications précédentes, dans lequel la vitesse d'écoulement de l'air chaud dans le système de circulation d'air supérieur (11, 12, 13, 19) peut être ajustée de telle sorte que le débit volumique d'air chaud orienté par le biais du raccord de buse supérieur (18) vers le côté supérieur (G1) du paquet de verre (G) adopte une valeur prédéfinie.

8. Module de bloc de chauffage selon l'une quelconque des revendications précédentes, comprenant un bloc de chauffage inférieur (2), depuis lequel de la chaleur est diffusée au moyen de dispositifs à rayonnement infrarouge inférieurs (27a, 27b, 27c) et de l'air chaud est diffusé au moyen d'un système de circulation d'air (21, 22, 23, 29) dans une zone de chauffage inférieure (D2) en vue de chauffer le paquet de verre, le système de circulation d'air inférieur présentant :
a) un raccord de buse inférieur (28), par le biais duquel de l'air chaud est soufflé directement sur un côté inférieur (G2) du paquet de verre (G), et
b) des moyens d'aspiration inférieurs (22, 22a-22b) pour la recirculation de l'air chaud directement depuis le côté inférieur (G2) du paquet de verre (G) dans le système de circulation d'air inférieur (21, 22, 23, 29).

9. Module de bloc de chauffage selon la revendication 8, dans lequel le raccord de buse inférieur (28) présente des canaux d'alimentation d'air chaud inférieurs (23, 24, 25) disposés entre les dispositifs à rayonnement infrarouge inférieurs (27a, 27b, 27c) avec des buses à fente (23b, 23c) orientées vers le côté inférieur (G2) du paquet de verre (G).

10. Module de bloc de chauffage selon la revendication 9, dans lequel les canaux d'alimentation d'air chaud inférieurs (23, 24, 25) sont disposés avec les buses à fente (23b, 23c) parallèlement les uns aux autres et de manière répartie sur le côté inférieur (G2) du paquet de verre (G) dans la zone de chauffage inférieure (D2).

11. Module de bloc de chauffage selon la revendication 9 ou 10, dans lequel les canaux d'alimentation d'air chaud inférieurs (23, 24, 25) s'étendent avec les buses à fente (23b, 23c) sur toute la largeur de la zone de chauffage inférieure (D2).

12. Module de bloc de chauffage selon l'une quelconque des revendications 9, 10 ou 11, comprenant des rouleaux de transport (R) dans le bloc de chauffage inférieur (2) pour le transport du paquet de verre (G),
a) les canaux d'alimentation d'air chaud inférieurs (23, 24, 25) étant à chaque fois disposés sous un rouleau de transport (R), et
b) présentant une paire respective de buses à fente (23b, 23c), qui sont orientées des deux côtés du rouleau de transport (R) au-dessus d'elles latéralement vers le haut vers le côté inférieur (G2) du paquet de verre (G).

13. Module de bloc de chauffage selon l'une quelconque des revendications 8 à 12, dans lequel les moyens d'aspiration inférieurs (22, 22a-22b) du système de circulation d'air inférieur (21, 22, 23, 29) présentent des fentes d'aspiration inférieures (22a, 22b) et une fente d'aspiration (22a, 22b) est disposée à chaque fois directement en dessous d'un dispositif à rayonnement infrarouge inférieur (27b, 27c).

14. Module de bloc de chauffage selon l'une quelconque des revendications 8 à 13, dans lequel la vitesse d'écoulement de l'air chaud dans le système de circulation d'air inférieur (21, 22, 23, 29) peut être ajustée de telle sorte que le débit volumique d'air chaud orienté par le biais du raccord de buse inférieur (28) vers le côté inférieur (G2) du paquet de verre (G) adopte une valeur prédéfinie.
